# EUROPEAN PATENT APPLICATION

(11) **EP 4 521 668 A1**
(43) Date of publication of application: **12.03.2025**
(21) Application number: 23799263.1
(22) Date of filing: 04.05.2023
(51) Int. Cl.: H04L 1/18

(54) **METHOD AND APPARATUS FOR DETERMINING HYBRID AUTOMATIC REPEAT REQUEST-ACKNOWLEDGEMENT (HARQ-ACK) CODEBOOK, AND TERMINAL**

(30) Priority: 06.05.2022 CN 202210488104
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Lavoix
(86) International application number: PCT/CN2023/092120
(87) International publication number: WO 2023/213277

(57) **Abstract**

This application discloses a method and an apparatus for determining a hybrid automatic repeat request-acknowledgment HARQ-ACK codebook, and a terminal, and pertains to the field of communication technology. The method for determining a HARQ-ACK codebook according to an embodiment of this application includes: determining, by a terminal, a target HARQ-ACK codebook based on a HARQ-ACK codebook type and/or scenario type for a physical downlink channel; where the HARQ-ACK codebook type for the physical downlink channel includes a type 1 HARQ-ACK codebook and a type 2 HARQ-ACK codebook; and the scenario type for the physical downlink channel includes a first scenario and a second scenario, where the first scenario is that the terminal reports, on one PUCCH, only a HARQ-ACK corresponding to a specified physical downlink channel received within a candidate PDSCH reception occasion, and the second scenario is a scenario other than the first scenario.

## Description

### CROSS-REFERENCE TO RELATED APPLICATIONS

This application claims priority to Chinese Patent Application No. 202210488104.6, filed with the China National Intellectual Property Administration on May 06, 2022 and entitled "METHOD AND APPARATUS FOR DETERMINING HYBRID AUTOMATIC REPEAT REQUEST-ACKNOWLEDGMENT HARQ-ACK CODEBOOK, AND TERMINAL", which is incorporated herein by reference in its entirety.

### TECHNICAL FIELD

This application pertains to the field of communication technology, and specifically relates to a method and an apparatus for determining a hybrid automatic repeat request-acknowledgment HARQ-ACK codebook, and a terminal.

### BACKGROUND

Currently, in new radio (New Radio, NR) systems, in addition to unicast (unicast) physical downlink control channel (Physical Downlink Control Channel, PDCCH) and unicast physical downlink shared channel (Physical Downlink Shared Channel, PDSCH) supporting hybrid automatic repeat request-acknowledgement (Hybrid automatic repeat request acknowledgement, HARQ-ACK) feedback, multicast (multicast) PDSCH and multicast PDCCH also support HARQ-ACK feedback.

However, how a terminal determines a HARQ-ACK codebook for multicast HARQ-ACK and/or unicast HARQ-ACK is still a technical issue that needs to be solved urgently.

### SUMMARY

Embodiments of this application provide a method and an apparatus for determining a hybrid automatic repeat request-acknowledgment HARQ-ACK codebook, and a terminal, so as to determine HARQ-ACK codebooks for multicast HARQ-ACK and unicast HARQ-ACK.

According to a first aspect, a method for determining a hybrid automatic repeat request-acknowledgment HARQ-ACK codebook is provided, including: determining, by a terminal, a target HARQ-ACK codebook based on a HARQ-ACK codebook type and/or scenario type for a physical downlink channel; where the HARQ-ACK codebook type for the physical downlink channel includes a type 1 HARQ-ACK codebook and a type 2 HARQ-ACK codebook; and the scenario type for the physical downlink channel includes a first scenario and a second scenario, where the first scenario is that the terminal reports, on one PUCCH, only a HARQ-ACK corresponding to a specified physical downlink channel received within a candidate PDSCH reception occasion, and the second scenario is a scenario other than the first scenario.

According to a second aspect, an apparatus for determining a hybrid automatic repeat request-acknowledgment HARQ-ACK codebook is provided, including: a determining module configured to determine a target HARQ-ACK codebook based on a HARQ-ACK codebook type and/or scenario type for a physical downlink channel; where the HARQ-ACK codebook type for the physical downlink channel includes a type 1 HARQ-ACK codebook and a type 2 HARQ-ACK codebook; and the scenario type for the physical downlink channel includes a first scenario and a second scenario, where the first scenario is that the terminal reports, on one PUCCH, only a HARQ-ACK corresponding to a specified physical downlink channel received within a candidate PDSCH reception occasion, and the second scenario is a scenario other than the first scenario.

According to a fifth aspect, a terminal is provided, where the terminal includes a processor and a memory, the memory stores a program or an instruction capable of running on the processor, and when the program or instruction is executed by the processor, the steps of the method according to the first aspect are implemented.

According to a fourth aspect, a terminal is provided, including a processor and a communication interface, where the communication interface is coupled to the processor, and the processor is configured to run a program or an instruction to implement the steps of the method according to the first aspect.

According to a fifth aspect, a wireless communication system is provided, including: a terminal and a network-side device, where the terminal is configured to perform the steps of the method according to the first aspect.

According to a sixth aspect, a readable storage medium is provided, where a program or an instruction is stored in the readable storage medium, and when the program or instruction is executed by a processor, the steps of the method according to the first aspect are implemented.

According to a seventh aspect, a chip is provided, where the chip includes a processor and a communication interface, the communication interface is coupled to the processor, and the processor is configured to run a program or an instruction to implement the method according to the first aspect.

According to an eighth aspect, a computer program product/program product is provided, where the computer program product/program product is stored in a storage medium, and the computer program product/program product is executed by at least one processor to implement the steps of the method according to the first aspect.

In the embodiments of this application, the terminal determines the target HARQ-ACK codebook based on the HARQ-ACK codebook type and/or scenario type for the physical downlink channel. In this way, an effective solution for determining HARQ-ACK codebooks for multicast HARQ-ACK and/or unicast HARQ-ACK can be provided, ensuring performance of the communication system.

### BRIEF DESCRIPTION OF DRAWINGS

FIG. 1 is a schematic structural diagram of a wireless communication system according to an example embodiment of this application.
FIG. 2 is a flowchart of a method for determining a HARQ-ACK codebook according to an example embodiment of this application.
FIG. 3 is a flowchart of a method for determining a HARQ-ACK codebook according to another example embodiment of this application.
FIG. 4 is a schematic structural diagram of an apparatus for determining a HARQ-ACK codebook according to an example embodiment of this application.
FIG. 5 is a schematic structural diagram of a terminal according to an example embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, an NR system is described for illustrative purposes, and NR terms are used in most of the following descriptions, although these technologies may also be applied to other applications than the NR system application, for example, to the 6^{th} generation (6^{th} Generation, 6G) communication system.

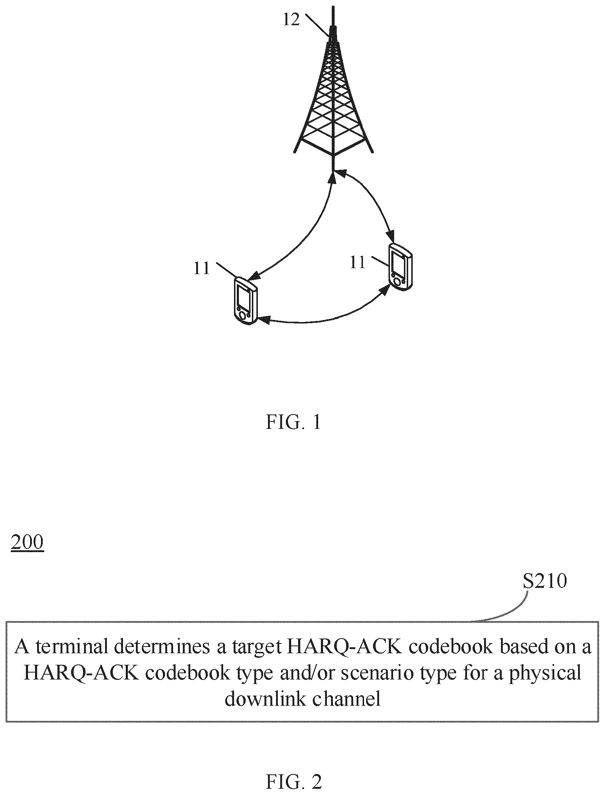

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart band, a smart ring, a smart necklace, a smart leglet, a smart anklet, and the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Networks, WLAN) access point, a Wi-Fi node, or the like. The base station may be referred to as Node B, evolved Node B (evolved Node B, eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is described as an example, and the specific type of the base station is not limited.

The following details the technical solutions provided in the embodiments of this application by using some embodiments and application scenarios with reference to the accompanying drawings.

FIG. 2 is a flowchart of a method 200 for determining a HARQ-ACK codebook according to an example embodiment of this application. The method 200 may be executed by a terminal but is not limited thereto, and specifically may be executed by hardware and/or software installed in the terminal. In this embodiment, the method 200 may at least include the following step.

Step S210. The terminal determines a target HARQ-ACK codebook based on a HARQ-ACK codebook type and/or scenario type for a physical downlink channel.

The HARQ-ACK codebook (codebook) type for the physical downlink channel includes a type (type) 1 HARQ-ACK codebook (such as pdsch-HARQ-ACK-Codebook = semi-static) and a type 2 HARQ-ACK codebook (such as pdsch-HARQ-ACK-Codebook-Multicast = dynamic). For example, in a case that the physical downlink channel includes a unicast physical downlink channel and a multicast physical downlink channel, a HARQ-ACK codebook type for the unicast physical downlink channel may be the type 1 HARQ-ACK codebook, and a HARQ-ACK codebook type for the multicast physical downlink channel may be the type 2 HARQ-ACK codebook. For another example, the HARQ-ACK codebook type for the unicast physical downlink channel may be the type 2 HARQ-ACK codebook, and the HARQ-ACK codebook type for the multicast physical downlink channel may be the type 1 HARQ-ACK codebook. It can be understood that the HARQ-ACK codebook type for the physical downlink channel mentioned in this embodiment may be but is not limited to the types described above.

The scenario types corresponding to the physical downlink channel include a first scenario (or referred to as a fallback (Fallback) scenario) and a second scenario (or referred to as a non-fallback (non-Fallback) scenario). The first scenario is that the terminal reports, on a physical uplink control channel (Physical Uplink Control Channel, PUCCH), only a HARQ-ACK corresponding to a specified physical downlink channel received within a candidate PDSCH reception occasion (for example, the terminal is scheduled to feed back only the HARQ-ACK corresponding to the specified physical downlink channel on one PUCCH), and the second scenario is a scenario other than the first scenario (for example, the terminal is scheduled to feed back a HARQ-ACK corresponding to a physical downlink channel other than the specified physical downlink channel on one PUCCH). The first scenario and/or the second scenario may be implemented by protocol agreement, higher layer configuration, or network-side configuration, which is not limited herein.

In this case, the physical downlink channel mentioned in this embodiment may be a PDSCH and/or a PDCCH. If the terminal needs to feed back, in a same time unit (for example, a slot (Slot), a sub-slot, a symbol, or a sub-symbol), a HARQ-ACK corresponding to a unicast physical downlink channels (for example, a unicast PDSCH or a unicast PDCCH) and a HARQ-ACK corresponding to a multicast physical downlink channel (for example, a multicast PDCCH or a multicast PDSCH), and the HARQ-ACK corresponding to the unicast physical downlink channel has the same priority as the HARQ-ACK corresponding to the multicast physical downlink channel, the physical downlink channel can include both the unicast physical downlink channel and the multicast physical downlink channel.

In addition, in this embodiment, the physical downlink channel may alternatively be a dynamic grant (Dynamic Grant, DG) physical downlink channel, a semi-persistent scheduling (Semi-Persistent Scheduling, SPS) physical downlink channel, or the like, which is not limited herein.

It should be noted that if the physical downlink channel is a PDCCH, the terminal only needs to feed back a HARQ-ACK corresponding to the specified PDCCH. The specified PDCCH may be a PDCCH indicating the release of an SPS PDSCH, a PDCCH indicating secondary cell dormancy (Scell dormancy) without scheduling a PDSCH, a PDCCH indicating a transmission configuration indicator (Transmission Configuration Indicator, TCI) state (state) update, or the like.

In this embodiment, the terminal determines the target HARQ-ACK codebook based on the HARQ-ACK codebook type and/or scenario type for the physical downlink channel. In this way, an effective solution for determining HARQ-ACK codebooks for multicast HARQ-ACK and/or unicast HARQ-ACK can be provided, implementing reporting of HARQ-ACK information and ensuring performance of the communication system.

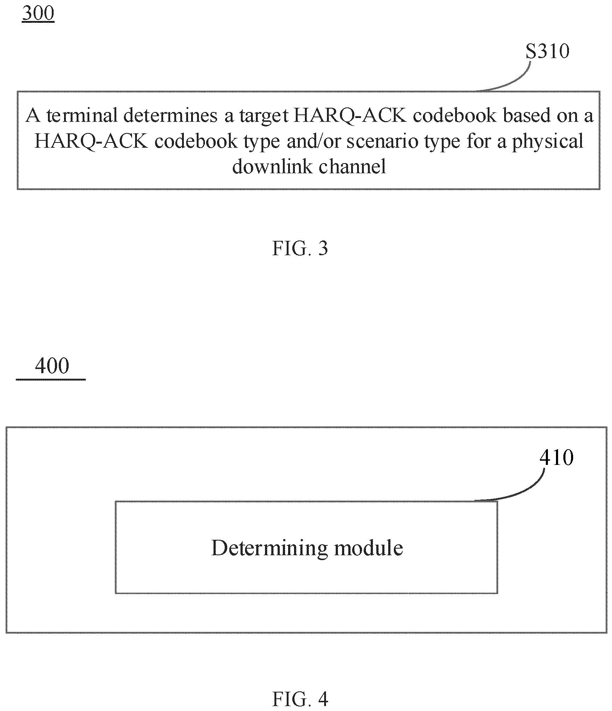

FIG. 3 is a flowchart of a method 300 for determining a HARQ-ACK codebook according to an example embodiment of this application. The method 300 may be executed by a terminal but is not limited thereto, and specifically may be executed by hardware and/or software installed in the terminal. In this embodiment, the method 300 may at least include the following step.

Step S310. The terminal determines a target HARQ-ACK codebook based on a HARQ-ACK codebook type and/or scenario type for a physical downlink channel.

The HARQ-ACK codebook type for the physical downlink channel includes a type 1 HARQ-ACK codebook and a type 2 HARQ-ACK codebook; and the scenario type for the physical downlink channel includes a first scenario and a second scenario. The first scenario is that the terminal reports, on one PUCCH, a HARQ-ACK corresponding to a specified physical downlink channel received within a candidate PDSCH reception occasion, and the second scenario is a scenario other than the first scenario.

It can be understood that for the implementation process of S310, reference may be made to the relevant description in the method embodiment 200. Moreover, in a possible implementation, the specified physical downlink channel may include any one of (11) to (13).

(11) A specific PDCCH, where the specific PDCCH carries downlink control information (Downlink Control Information, DCI) of a first format, and the DCI of the first format indicates release of SPS PDSCH, a downlink assignment index (Downlink assignment index, DAI) corresponding to the DCI of the first format being 1.

Optionally, in a case that the specific PDCCH is a unicast physical downlink channel (for example, a PDCCH scrambled with a configured scheduling radio network temporary identifier (Configured Scheduling Radio Network Temporary Identifier, CS-RNTI)), the first format is DCI 1_0; or in a case that the specific PDCCH is a multicast physical downlink channel (for example, scrambled with a group-configured scheduling RNTI (Group-Configured Scheduling-RNTI, G-CS-RNTI)), the DCI of the second format is DCI 4_1.

(12) A specific PDSCH, where the specific PDSCH is scheduled by DCI of a second format, and a DAI corresponding to the DCI of the second format is 1.

Optionally, in a case that the specific PDSCH is a unicast physical downlink channel (for example, scrambled with a cell-radio network temporary identifier (Cell-Radio Network Temporary Identifier, C-RNTI)), the DCI of the second format is DCI 1_0; or in a case that the specific PDSCH is a multicast physical downlink channel (for example, scrambled with a group RNTI (G-RNTI)), the DCI of the second format is DCI 4_1. The DAI is a counter DAI (Counter DAI, C-DAI).

In addition, in an implementation, the specific PDSCH may be located in a primary cell (Primary cell, PCell). For example, in a case that the specific PDSCH is a unicast PDSCH, the unicast PDSCH is located in a PCell. Correspondingly, in a case that the specific PDSCH is a multicast PDSCH, the multicast PDSCH may be located in a PCell or in a cell other than the PCell, such as a cell configured with multicast reception.

(13) At least one SPS PDSCH.

Certainly, in another implementation, there are multiple processes for the terminal to determine the target HARQ-ACK codebook based on the HARQ-ACK codebook type and/or scenario type for the physical downlink channel. Descriptions are provided below in combination with two different implementations.

### Implementation 1

In a case that a HARQ-ACK codebook type for a first physical downlink channel is the type 1 HARQ-ACK codebook (also referred to as type 1 or semi-static codebook type) and a HARQ-ACK codebook type for a second physical downlink channel is the type 2 HARQ-ACK codebook (also referred to as type 2 or dynamic codebook type), the terminal generates at least two of the following HARQ-ACK sub-codebooks: a first HARQ-ACK sub-codebook, a second HARQ-ACK sub-codebook, and a third HARQ-ACK sub-codebook, and concatenates the generated HARQ-ACK sub-codebooks to obtain the target HARQ-ACK codebook.

The first HARQ-ACK sub-codebook corresponds to the first physical downlink channel. In a possible implementation, in a case that the scenario type for the first physical downlink channel is different, the way in which the terminal generates the first HARQ-ACK sub-codebook can also be different. For example, in a case that the scenario type for the first physical downlink channel is the first scenario, the terminal generates the first HARQ-ACK sub-codebook based on the received HARQ-ACK corresponding to the first physical downlink channel.

For another example, in a case that the scenario type for the first physical downlink channel is the second scenario, the terminal determines a candidate PDSCH reception occasion (candidate PDSCH reception occasion) based on a time domain resource assignment table (Time domain resource assignment, TDRA) corresponding to the first physical downlink channel, and generates the first HARQ-ACK sub-codebook based on the candidate PDSCH reception occasion. It can be understood that when determining the candidate PDSCH reception occasion based on the TDRA, the terminal can also determine the candidate PDSCH reception occasion in combination with a timing K1 from PDSCH to HARQ-ACK feedback, semi-static uplink and downlink configuration, or the like. K1 represents the number of time units from a time unit in which the PDSCH reception location falls to a time unit in which the terminal makes HARQ feedback. To be specific, when the terminal receives a PDSCH in time unit n, the terminal feeds back corresponding HARQ information in time unit n+K1.

Additionally, the first HARQ-ACK sub-codebook may include a HARQ-ACK sub-codebook corresponding to a DG PDSCH of the first physical downlink channel and/or a HARQ-ACK sub-codebook corresponding to an SPS PDSCH of the first physical downlink channel. That is, for the type 1 HARQ-ACK codebook, the HARQ-ACKs of the DG PDSCH and the SPS PDSCH can be determined based on the candidate PDSCH reception occasion.

The second HARQ-ACK sub-codebook corresponds to a DG PDSCH of the second physical downlink channel. In an implementation, the terminal can generate the second HARQ-ACK sub-codebook according to the type 2 codebook generation method (for example, based on a DAI).

The third HARQ-ACK sub-codebook corresponds to an SPS PDSCH of the second physical downlink channel. In an implementation, the terminal can generate the third HARQ-ACK sub-codebook according to the SPS PDSCH HARQ-ACK codebook generation method. For example, the terminal can generate the third HARQ-ACK sub-codebook based on a serving cell index, an SPS PDSCH configuration index, a slot in which the SPS PDSCH is located, or the like. It should be noted that the third HARQ-ACK sub-codebook contains only the HARQ-ACK corresponding to the SPS PDSCH of the second physical downlink channel.

Certainly, in implementation 1, the first physical downlink channel mentioned may be a unicast physical downlink channel (such as a unicast PDSCH or a unicast PDCCH) and the second physical downlink channel may be a multicast physical downlink channel (such as a multicast PDSCH or a multicast PDCCH); or the first physical downlink channel may be a multicast physical downlink channel and the second physical downlink channel may be a unicast physical downlink channel.

In addition, in an implementation, when the terminal concatenates the generated HARQ-ACK sub-codebooks, the concatenation order of the HARQ-ACK sub-codebooks can be agreed upon by a protocol, configured by a higher layer, or autonomously determined by the terminal, thus ensuring that the terminal and the network-side device have a consistent understanding in the order of the HARQ-ACK sub-codebooks. This allows the network-side device to clearly understand the position of the HARQ-ACK corresponding to the SPS PDSCH in the target HARQ-ACK codebook when receiving the target HARQ-ACK codebook sent by the terminal, thus implementing deterministic resource scheduling.

It should be noted that if the concatenation order of the HARQ-ACK sub-codebooks is autonomously determined by the terminal, the terminal can report the concatenation order to the network-side device.

Based on the description of implementation 1 above, assuming that the unicast HARQ-ACK codebook is configured as type 1, that is, pdsch-HARQ-ACK-Codebook = semi-static, the multicast HARQ-ACK codebook is configured as type 2, that is, pdsch-HARQ-ACK-Codebook-Multicast = dynamic, and unicast SPS PDSCH and multicast SPS PDSCH are activated for the terminal, the terminal can generate the target HARQ-ACK codebook according to example 1 or example 2 described below.

### Example 1

If in an uplink time unit (such as a slot or a sub-slot), the terminal is scheduled to feed back a HARQ-ACK corresponding to a unicast DG PDSCH, a HARQ-ACK corresponding to a unicast SPS PDSCH, a HARQ-ACK corresponding to a multicast DG PDSCH, and a HARQ-ACK corresponding to a multicast SPS PDSCH, the terminal can determine a HARQ-ACK codebook in the following manner.
(a) Since the scenario type for the unicast PDSCH (that is, the first physical downlink channel) is the second scenario, the terminal can determine a candidate PDSCH reception occasion for unicast based on a TDRA corresponding to the unicast PDSCH (also referred to as the TDRA corresponding to unicast DCI), K1 (also referred to as K1 corresponding to unicast DCI), and uplink and downlink configuration, and then generate the first HARQ-ACK sub-codebook corresponding to the unicast PDSCH based on the candidate PDSCH reception occasion. The first HARQ-ACK sub-codebook includes HARQ-ACKs corresponding to the unicast DG PDSCH and the unicast SPS PDSCH.
(b) The terminal can generate the second HARQ-ACK sub-codebook corresponding to the multicast DG PDSCH based on a DAI.
(c) The terminal can generate the third HARQ-ACK sub-codebook corresponding to the multicast SPS PDSCH based on an SPS PDSCH configuration index, a slot in which the SPS PDSCH is located, or the like.
(d) The terminal concatenates the first HARQ-ACK sub-codebook, the second HARQ-ACK sub-codebook, and the third HARQ-ACK sub-codebook in a first order to obtain the target HARQ-ACK codebook. The first order may be (first HARQ-ACK sub-codebook, second HARQ-ACK sub-codebook, third HARQ-ACK sub-codebook), (first HARQ-ACK sub-codebook, third HARQ-ACK sub-codebook, second HARQ-ACK sub-codebook), (third HARQ-ACK sub-codebook, second HARQ-ACK sub-codebook, first HARQ-ACK sub-codebook), or the like, which is not limited herein.

It should be noted that in example 1, the unicast DG PDSCH and the unicast SPS PDSCH belong to the first physical downlink channel; and the multicast SPS PDSCH and the multicast DG PDSCH belong to the second physical downlink channel.

### Example 2

In an uplink time unit (such as a slot or a sub-slot), the terminal is scheduled to feed back a HARQ-ACK corresponding to a unicast DG PDSCH (or a unicast DG PDCCH), a HARQ-ACK corresponding to a multicast DG PDSCH, and a HARQ-ACK corresponding to a multicast SPS PDSCH, where the unicast DG PDSCH is a PDSCH scheduled by DCI 1_0 on a Pcell, and a DAI corresponding to the DCI 1_0 is 1 (or a unicast DCI indicating the release of SPS PDSCH or a unicast DCI indicating Scell dormancy), that is, the scenario type for the unicast DG PDSCH (or the unicast PDCCH) is the first scenario, Then, the terminal can determine the target HARQ-ACK codebook in the following manner.
(a) The terminal generates the first HARQ-ACK sub-codebook corresponding to the unicast DG PDSCH (or the unicast DG PDCCH).
(b) The terminal can generate the second HARQ-ACK sub-codebook corresponding to the multicast DG PDSCH based on a DAI.
(c) The terminal can generate the third HARQ-ACK sub-codebook corresponding to the multicast SPS PDSCH based on an SPS PDSCH configuration index, a slot in which the SPS PDSCH is located, or the like.
(d) The terminal concatenates the first HARQ-ACK sub-codebook, the second HARQ-ACK sub-codebook, and the third HARQ-ACK sub-codebook in a second order to obtain the target HARQ-ACK codebook.

The second order may be (first HARQ-ACK sub-codebook, second HARQ-ACK sub-codebook, third HARQ-ACK sub-codebook), (first HARQ-ACK sub-codebook, third HARQ-ACK sub-codebook, second HARQ-ACK sub-codebook), (third HARQ-ACK sub-codebook, second HARQ-ACK sub-codebook, first HARQ-ACK sub-codebook), or the like, which is not limited herein.

In addition, if the unicast HARQ-ACK codebook is configured as type 2, that is, pdsch-HARQ-ACK-Codebook-Multicast = dynamic, the multicast HARQ-ACK codebook is configured as type 1, that is, pdsch-HARQ-ACK-Codebook = semi-static, and unicast SPS PDSCH and multicast SPS PDSCH are activated for the terminal, the way in which the terminal determines the target HARQ-ACK codebook is similar to those in examples 1 and 2. To avoid repetition, details are not described herein.

### Implementation 2

In a case that the HARQ-ACK codebook type for the first physical downlink channel is the type 1 HARQ-ACK codebook and the HARQ-ACK codebook type for the second physical downlink channel is the type 2 HARQ-ACK codebook, the terminal performs (21) or (22).

(21) In a case that a scenario type for the first physical downlink channel is the second scenario, generate at least two of the following HARQ-ACK sub-codebooks: a first HARQ-ACK sub-codebook, a second HARQ-ACK sub-codebook, and a third HARQ-ACK sub-codebook, and concatenate the generated HARQ-ACK sub-codebooks to obtain the target HARQ-ACK codebook, where the first HARQ-ACK sub-codebook corresponds to the first physical downlink channel, the second HARQ-ACK sub-codebook corresponds to a DG PDSCH of the second physical downlink channel, and the third HARQ-ACK sub-codebook corresponds to an SPS PDSCH of the second physical downlink channel. The first physical downlink channel is a unicast physical downlink channel and the second physical downlink channel is a multicast physical downlink channel, or the first physical downlink channel is a multicast physical downlink channel and the second physical downlink channel is a unicast physical downlink channel.

It can be understood that the implementation mentioned in (21) has the same or corresponding technical features as implementation 1. Therefore, for the implementation process of (21), reference may be made to the relevant description in implementation 1 of the method. To avoid repetition, details are not described herein.

(22) In a case that the scenario type for the first physical downlink channel is the first scenario, or in a case that the target HARQ-ACK for feedback includes only a HARQ-ACK corresponding to an SPS PDSCH of the first physical downlink channel, generate a fourth HARQ-ACK sub-codebook and/or a fifth HARQ-ACK sub-codebook, and concatenate the fourth HARQ-ACK sub-codebook and the fifth HARQ-ACK sub-codebook to obtain the HARQ-ACK codebook.

The fourth HARQ-ACK sub-codebook corresponds to the DG PDSCH of the second physical downlink channel. In an implementation, the terminal can generate the fourth HARQ-ACK sub-codebook according to the type 2 codebook generation method (for example, based on a DAI).

The fifth HARQ-ACK sub-codebook corresponds to at least one of the SPS PDSCH of the first physical downlink channel, the SPS PDSCH of the second physical downlink channel, and the specified physical downlink channel in the first physical downlink channel. In an implementation, the terminal can generate the fifth HARQ-ACK sub-codebook according to the SPS PDSCH HARQ-ACK codebook generation method. For example, the terminal can generate the fifth HARQ-ACK sub-codebook based on a serving cell index, an SPS PDSCH configuration index, a slot in which the SPS PDSCH is located, or the like.

Certainly, in implementation 2, the first physical downlink channel mentioned may be a unicast physical downlink channel and the second physical downlink channel may be a multicast physical downlink channel; or the first physical downlink channel may be a multicast physical downlink channel and the second physical downlink channel may be a unicast physical downlink channel.

Optionally, when the terminal concatenates the generated fourth HARQ-ACK sub-codebook and fifth HARQ-ACK sub-codebook, the concatenation order may be agreed upon by a protocol, configured by a higher layer, configured by the network side, or autonomously determined by the terminal, thus ensuring that the terminal and the network-side device have a consistent understanding in the order of the fourth HARQ-ACK sub-codebook and the fifth HARQ-ACK sub-codebook. This allows the network-side device to clearly understand the position of the HARQ-ACK corresponding to the SPS PDSCH in the target HARQ-ACK codebook when receiving the target HARQ-ACK codebook sent by the terminal.

It should be noted that if the concatenation order of the fourth HARQ-ACK sub-codebook and the fifth HARQ-ACK sub-codebook is autonomously determined by the terminal, the terminal can report the concatenation order to the network-side device.

Based on the description of implementation 2, assuming that the unicast HARQ-ACK codebook is configured as type 1, that is, pdsch-HARQ-ACK-Codebook = semi-static, the multicast HARQ-ACK codebook is configured as type 2, that is, pdsch-HARQ-ACK-Codebook-Multicast = dynamic, and unicast SPS PDSCH and multicast SPS PDSCH are activated for the terminal, the terminal can generate the target HARQ-ACK codebook according to example 3 or example 4 described below.

### Example 3

In an uplink time unit (such as a slot or a sub-slot), the terminal is scheduled to feed back a HARQ-ACK corresponding to a unicast SPS PDSCH, a HARQ-ACK corresponding to a multicast DG PDSCH, and a HARQ-ACK corresponding to a multicast SPS PDSCH. Then, the terminal can determine the target HARQ-ACK codebook in the following manner.
(a) Since the scenario type for the unicast PDSCH (that is, the first physical downlink channel) is the first scenario, the terminal can generate the first HARQ-ACK sub-codebook corresponding to the unicast SPS PDSCH based on a serving cell index, an SPS PDSCH configuration index, a slot in which the SPS PDSCH is located, or the like.
(b) The terminal can generate the second HARQ-ACK sub-codebook corresponding to the multicast DG PDSCH based on a DAI.
(c) The terminal can generate the second HARQ-ACK sub-codebook corresponding to the multicast SPS PDSCH based on an SPS PDSCH configuration index, a slot in which the SPS PDSCH is located, or the like.
(d) The terminal concatenates the first HARQ-ACK sub-codebook, the second HARQ-ACK sub-codebook, and the third HARQ-ACK sub-codebook in a third order to obtain the target HARQ-ACK codebook.

The third order may be (first HARQ-ACK sub-codebook, second HARQ-ACK sub-codebook, third HARQ-ACK sub-codebook), (first HARQ-ACK sub-codebook, third HARQ-ACK sub-codebook, second HARQ-ACK sub-codebook), (third HARQ-ACK sub-codebook, second HARQ-ACK sub-codebook, first HARQ-ACK sub-codebook), or the like, which is not limited herein.

It should be noted that in example 3, the unicast SPS PDSCH belongs to the first physical downlink channel; and the multicast SPS PDSCH and the multicast DG PDSCH belong to the second physical downlink channel.

### Example 4

If in an uplink time unit (such as a slot or a sub-slot), the terminal is scheduled to feed back a HARQ-ACK corresponding to a unicast SPS PDSCH, a HARQ-ACK corresponding to a multicast DG PDSCH, and a HARQ-ACK corresponding to a multicast SPS PDSCH, the terminal can determine the target HARQ-ACK codebook in the following manner.
(a) The terminal can generate a fourth HARQ-ACK sub-codebook corresponding to the multicast DG PDSCH based on the DAI.
(b) The terminal generates a fifth HARQ-ACK sub-codebook corresponding to the unicast SPS and multicast SPS PDSCHs based on the serving cell index, SPS PDSCH configuration indexes, slots in which the SPS PDSCHs are located, or the like.
(c) The terminal concatenates the fourth HARQ-ACK sub-codebook and the fifth HARQ-ACK sub-codebook in a fourth order to obtain the final target HARQ-ACK codebook. The fourth order may be (fourth HARQ-ACK sub-codebook, fifth HARQ-ACK sub-codebook) or (fifth HARQ-ACK sub-codebook, fourth HARQ-ACK sub-codebook), which is not limited herein.

The method for determining a HARQ-ACK codebook provided in this embodiment is applicable to a codebook determining scenario in which the unicast HARQ-ACK is configured with a type 1 HARQ-ACK codebook and the multicast HARQ-ACK is configured with a type 2 HARQ-ACK codebook, or in which the unicast HARQ-ACK is configured with a type 2 HARQ-ACK codebook and the multicast HARQ-ACK is configured with a type 1 HARQ-ACK codebook. That is, the method for determining a HARQ-ACK codebook provided in this embodiment can implement reporting of multicast HARQ-ACKs and unicast HARQ-ACKs corresponding to different codebook types and/or different scenarios.

In addition, compared with the HARQ-ACK feedback in the related art, in this application, the HARQ-ACK codebook for SPS PDSCH is generated and fed back only once, effectively avoiding the problem of repeated generation of HARQ-ACK for SPS PDSCH in the related art, reducing the codebook size, and improving the effectiveness of the communication system.

The methods 200 and 300 for determining a HARQ-ACK codebook provided in the embodiments of this application can be executed by an apparatus for determining a HARQ-ACK codebook. In the embodiment of this application, the method for determining a HARQ-ACK codebook being executed by an apparatus for determining a HARQ-ACK codebook is used as an example to describe the apparatus for determining a HARQ-ACK codebook provided in the embodiments of this application.

FIG. 4 is a schematic structural diagram of an apparatus for determining a HARQ-ACK codebook according to an example embodiment of this application. The apparatus 400 includes a determining module 410 configured to determine a target HARQ-ACK codebook based on a HARQ-ACK codebook type and/or scenario type for a physical downlink channel. The HARQ-ACK codebook type for the physical downlink channel includes a type 1 HARQ-ACK codebook and a type 2 HARQ-ACK codebook. The scenario type for the physical downlink channel includes a first scenario and a second scenario, where the first scenario is that the terminal reports, on one PUCCH, only a HARQ-ACK corresponding to a specified physical downlink channel received within a candidate PDSCH reception occasion, and the second scenario is a scenario other than the first scenario.

Optionally, the apparatus 400 further includes a receiving module configured to receive the physical downlink channel.

Optionally, the step of determining, by the determining module 410, a target HARQ-ACK codebook based on a HARQ-ACK codebook type and/or scenario type for a physical downlink channel includes: in a case that a HARQ-ACK codebook type for a first physical downlink channel is the type 1 HARQ-ACK codebook and a HARQ-ACK codebook type for a second physical downlink channel is the type 2 HARQ-ACK codebook, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook; where the first HARQ-ACK sub-codebook corresponds to the first physical downlink channel, the second HARQ-ACK sub-codebook corresponds to a dynamic grant physical downlink shared channel DG PDSCH of the second physical downlink channel, and the third HARQ-ACK sub-codebook corresponds to a semi-persistent scheduling SPS PDSCH of the second physical downlink channel; and the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

Optionally, the step of generating, by the determining module 410, the first HARQ-ACK sub-codebook includes either of the following: in a case that a scenario type for the first physical downlink channel is the first scenario, generating the first HARQ-ACK sub-codebook based on a received HARQ-ACK corresponding to the first physical downlink channel; and in a case that the scenario type for the first physical downlink channel is the second scenario, determining a candidate PDSCH reception occasion based on a time domain resource assignment table TDRA corresponding to the first physical downlink channel, and generating the first HARQ-ACK sub-codebook based on the candidate PDSCH reception occasion, where the first HARQ-ACK sub-codebook includes a HARQ-ACK sub-codebook corresponding to a DG PDSCH of the first physical downlink channel and/or a HARQ-ACK sub-codebook corresponding to an SPS PDSCH of the first physical downlink channel.

Optionally, the step of determining, by the determining module 410, a target HARQ-ACK codebook based on a HARQ-ACK codebook type and/or scenario type for a physical downlink channel includes: in a case that a HARQ-ACK codebook type for a first physical downlink channel is the type 1 HARQ-ACK codebook and a HARQ-ACK codebook type for a second physical downlink channel is the type 2 HARQ-ACK codebook, performing either of the following: in a case that a scenario type for the first physical downlink channel is the second scenario, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook, where the first HARQ-ACK sub-codebook corresponds to the first physical downlink channel, the second HARQ-ACK sub-codebook corresponds to a DG PDSCH of the second physical downlink channel, and the third HARQ-ACK sub-codebook corresponds to an SPS PDSCH of the second physical downlink channel; and in a case that the scenario type for the first physical downlink channel is the first scenario, or in a case that the target HARQ-ACK for feedback includes only a HARQ-ACK corresponding to an SPS PDSCH of the first physical downlink channel, generating a fourth HARQ-ACK sub-codebook and/or a fifth HARQ-ACK sub-codebook, and concatenating the fourth HARQ-ACK sub-codebook and the fifth HARQ-ACK sub-codebook to obtain the HARQ-ACK codebook; where the fourth HARQ-ACK sub-codebook corresponds to the DG PDSCH of the second physical downlink channel, and the fifth HARQ-ACK sub-codebook corresponds to at least one of the SPS PDSCH of the first physical downlink channel, the SPS PDSCH of the second physical downlink channel, and the specified physical downlink channel in the first physical downlink channel; where the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

Optionally, the specified physical downlink channel includes any one of the following: a specific PDCCH, where the specific PDCCH carries DCI of a first format, and the DCI of the first format indicates release of SPS PDSCH, a downlink assignment index DAI corresponding to the DCI of the first format being 1; a specific PDSCH, where the specific PDSCH is scheduled by DCI of a second format, and a DAI corresponding to the DCI of the second format is 1; and at least one SPS PDSCH.

Optionally, in a case that the specific PDCCH and/or the specific PDSCH is a unicast physical downlink channel, the DCI of the first format and the DCI of the second format are both DCI 1_0; and in a case that the specific PDCCH and/or the specific PDSCH is a multicast physical downlink channel, the DCI of the first format and the DCI of the second format are DCI 4_1.

Optionally, the specific PDSCH is located in a primary cell Pcell.

Optionally, the physical downlink channel includes a physical downlink shared channel and a physical downlink control channel.

The apparatus 400 for determining a HARQ-ACK codebook in the embodiment of this application may be an electronic device, such as an electronic device having an operating system, or a component in an electronic device, such as an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which are not specifically limited in the embodiments of this application.

The apparatus 400 for determining a HARQ-ACK codebook provided in the embodiment of this application can implement the processes of the method embodiments illustrated in FIG. 2 and FIG. 3, with the same technical effects achieved. To avoid repetition, details are not described herein again.

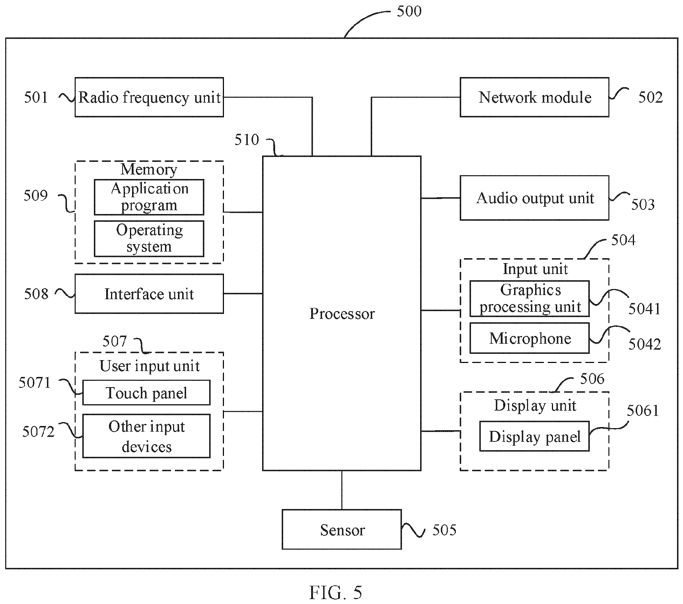

An embodiment of this application further provides a terminal including a processor and a communication interface, where the communication interface is coupled to the processor, and the processor is configured to run a program or an instruction to implement the steps of the method described in the method embodiments 200 and 300. This terminal embodiment corresponds to the terminal-side method embodiments described above. The processes and implementations of the above method embodiments are applicable to this terminal embodiment, with the same technical effects achieved. Specifically, FIG. 5 is a schematic diagram of a hardware structure of a terminal for implementing the embodiments of this application.

The terminal 500 includes but is not limited to at least some of a radio frequency unit 501, a network module 502, an audio output unit 503, an input unit 504, a sensor 505, a display unit 506, a user input unit 507, an interface unit 508, a memory 509, a processor 510, and the like.

A person skilled in the art can understand that the terminal 500 may further include a power supply (such as a battery) for supplying power to the components. The power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (for example, a camera) in a video capture mode or an image capture mode. The display unit 506 may include the display panel 5061. The display panel 5061 may be configured in a form of a liquid crystal display, an organic light-emitting diode, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but be not limited to a physical keyboard, a function key (such as a volume control key or an on/off key), a trackball, a mouse, and a joystick. Details are not described herein.

In this embodiment of this application, the radio frequency unit 501 receives downlink data from a network-side device and then transmits it to the processor 510 for processing; in addition, the radio frequency unit 501 can send uplink data to the network-side device. Typically, the radio frequency unit 501 includes but is not limited to an antenna, an amplifier, a transceiver, a coupler, a low noise amplifier, and a duplexer.

The memory 509 may be configured to store software programs or instructions and various data. The memory 509 may mainly include a first storage area for storing programs or instructions and a second storage area for storing data. The first storage area may store an operating system, an application program or instructions required by at least one function (for example, a sound play function or an image play function), and the like. Additionally, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 509 in the embodiment of this application includes but is not limited to these and any other suitable types of memory.

The processor 510 may include one or more processing units. Optionally, the processor 510 integrates an application processor and a modem processor. The application processor primarily processes operations involving an operating system, a user interface, an application program, or the like. The modem processor primarily processes radio communication signals, for example, being a baseband processor. It can be understood that the modem processor may alternatively be not integrated in the processor 510.

The processor 510 is configured to determine a target HARQ-ACK codebook based on a HARQ-ACK codebook type and/or scenario type for a physical downlink channel; where the HARQ-ACK codebook type for the physical downlink channel includes a type 1 HARQ-ACK codebook and a type 2 HARQ-ACK codebook; and the scenario type for the physical downlink channel includes a first scenario and a second scenario, where the first scenario is that the terminal reports, on one PUCCH, only a HARQ-ACK corresponding to a specified physical downlink channel received within a candidate PDSCH reception occasion, and the second scenario is a scenario other than the first scenario.

Optionally, the step of determining, by the processor 510, a target HARQ-ACK codebook based on a HARQ-ACK codebook type and/or scenario type for a physical downlink channel includes: in a case that a HARQ-ACK codebook type for a first physical downlink channel is the type 1 HARQ-ACK codebook and a HARQ-ACK codebook type for a second physical downlink channel is the type 2 HARQ-ACK codebook, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook; where the first HARQ-ACK sub-codebook corresponds to the first physical downlink channel, the second HARQ-ACK sub-codebook corresponds to a dynamic grant physical downlink shared channel DG PDSCH of the second physical downlink channel, and the third HARQ-ACK sub-codebook corresponds to a semi-persistent scheduling SPS PDSCH of the second physical downlink channel; and the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

Optionally, the step of generating, by the processor 510, the first HARQ-ACK sub-codebook includes either of the following: in a case that a scenario type for the first physical downlink channel is the first scenario, generating the first HARQ-ACK sub-codebook based on a received HARQ-ACK corresponding to the first physical downlink channel; and in a case that the scenario type for the first physical downlink channel is the second scenario, determining a candidate PDSCH reception occasion based on a time domain resource assignment table TDRA corresponding to the first physical downlink channel, and generating the first HARQ-ACK sub-codebook based on the candidate PDSCH reception occasion, where the first HARQ-ACK sub-codebook includes a HARQ-ACK sub-codebook corresponding to a DG PDSCH of the first physical downlink channel and/or a HARQ-ACK sub-codebook corresponding to an SPS PDSCH of the first physical downlink channel.

Optionally, the step of determining, by the processor 510, a target HARQ-ACK codebook based on a HARQ-ACK codebook type and/or scenario type for a physical downlink channel includes: in a case that a HARQ-ACK codebook type for a first physical downlink channel is the type 1 HARQ-ACK codebook and a HARQ-ACK codebook type for a second physical downlink channel is the type 2 HARQ-ACK codebook, performing either of the following: in a case that a scenario type for the first physical downlink channel is the second scenario, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook, where the first HARQ-ACK sub-codebook corresponds to the first physical downlink channel, the second HARQ-ACK sub-codebook corresponds to a DG PDSCH of the second physical downlink channel, and the third HARQ-ACK sub-codebook corresponds to an SPS PDSCH of the second physical downlink channel; and in a case that the scenario type for the first physical downlink channel is the first scenario, or in a case that the target HARQ-ACK for feedback includes only a HARQ-ACK corresponding to an SPS PDSCH of the first physical downlink channel, generating a fourth HARQ-ACK sub-codebook and/or a fifth HARQ-ACK sub-codebook, and concatenating the fourth HARQ-ACK sub-codebook and the fifth HARQ-ACK sub-codebook to obtain the HARQ-ACK codebook; where the fourth HARQ-ACK sub-codebook corresponds to the DG PDSCH of the second physical downlink channel, and the fifth HARQ-ACK sub-codebook corresponds to at least one of the SPS PDSCH of the first physical downlink channel, the SPS PDSCH of the second physical downlink channel, and the specified physical downlink channel in the first physical downlink channel; where the first physical downlink channel is a unicast physical downlink channel and the second physical downlink channel is a multicast physical downlink channel, or the first physical downlink channel is a multicast physical downlink channel, and the second physical downlink channel is a unicast physical downlink channel.

Optionally, the specified physical downlink channel includes any one of the following: a specific PDCCH, where the specific PDCCH carries DCI of a first format, and the DCI of the first format indicates release of SPS PDSCH, a downlink assignment index DAI corresponding to the DCI of the first format being 1; a specific PDSCH, where the specific PDSCH is scheduled by DCI of a second format, and a DAI corresponding to the DCI of the second format is 1; and at least one SPS PDSCH.

Optionally, in a case that the specific PDCCH and/or the specific PDSCH is a unicast physical downlink channel, the DCI of the first format and the DCI of the second format are both DCI 1_0; and in a case that the specific PDCCH and/or the specific PDSCH is a multicast physical downlink channel, the DCI of the first format and the DCI of the second format are DCI 4_1.

Optionally, the specific PDSCH is located in a primary cell Pcell.

Optionally, the physical downlink channel includes a physical downlink shared channel and a physical downlink control channel.

For the processes of the implementations mentioned in this embodiment, reference may be made to the implementation processes in the method embodiments 200 and 300, with the same technical effects achieved. To avoid repetition, details are not described herein.

An embodiment of this application further provides a readable storage medium, where the readable storage medium stores a program or an instruction, and when the program or instruction is executed by a processor, the processes of the foregoing method embodiments for determining a HARQ-ACK codebook are implemented, with the same technical effects achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or an instruction for a network-side device, to implement the processes of the method embodiments for determining a HARQ-ACK codebook, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product. The computer program product includes a processor, a memory, and a program or an instruction stored in the memory and capable of running on the processor. When the program or instruction is executed by the processor, the processes of the foregoing method embodiments for determining a HARQ-ACK codebook are implemented, with the same technical effects achieved. To avoid repetition, details are not described herein again.

An embodiment of this application further provides a communication system including: a terminal and a network-side device, where the terminal is configured to perform the processes of the foregoing method embodiments for determining a HARQ-ACK codebook, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A method for determining a hybrid automatic repeat request-acknowledgment HARQ-ACK codebook, comprising:
determining, by a terminal, a target HARQ-ACK codebook based on a HARQ-ACK codebook type and/or scenario type for a physical downlink channel; wherein
the HARQ-ACK codebook type for the physical downlink channel comprises a type 1 HARQ-ACK codebook and a type 2 HARQ-ACK codebook; and
the scenario type for the physical downlink channel comprises a first scenario and a second scenario, wherein the first scenario is that the terminal reports, on one PUCCH, only a HARQ-ACK corresponding to a specified physical downlink channel received within a candidate PDSCH reception occasion, and the second scenario is a scenario other than the first scenario.

2. The method according to claim 1, wherein the step of determining, by a terminal, a target HARQ-ACK codebook based on a HARQ-ACK codebook type and/or scenario type for a physical downlink channel comprises:
in a case that a HARQ-ACK codebook type for a first physical downlink channel is the type 1 HARQ-ACK codebook and a HARQ-ACK codebook type for a second physical downlink channel is the type 2 HARQ-ACK codebook, generating, by the terminal, at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook; wherein
the first HARQ-ACK sub-codebook corresponds to the first physical downlink channel, the second HARQ-ACK sub-codebook corresponds to a dynamic grant physical downlink shared channel DG PDSCH of the second physical downlink channel, and the third HARQ-ACK sub-codebook corresponds to a semi-persistent scheduling SPS PDSCH of the second physical downlink channel; and
the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

3. The method according to claim 2, wherein the step of generating, by the terminal, a first HARQ-ACK sub-codebook comprises either of the following:
in a case that a scenario type for the first physical downlink channel is the first scenario, generating, by the terminal, the first HARQ-ACK sub-codebook based on a received HARQ-ACK corresponding to the first physical downlink channel; and
in a case that the scenario type for the first physical downlink channel is the second scenario, determining, by the terminal, a candidate PDSCH reception occasion based on a time domain resource assignment table TDRA corresponding to the first physical downlink channel, and generating the first HARQ-ACK sub-codebook based on the candidate PDSCH reception occasion, wherein the first HARQ-ACK sub-codebook comprises a HARQ-ACK sub-codebook corresponding to a DG PDSCH of the first physical downlink channel and/or a HARQ-ACK sub-codebook corresponding to an SPS PDSCH of the first physical downlink channel.

4. The method according to claim 1, wherein the step of determining, by a terminal, a target HARQ-ACK codebook based on a HARQ-ACK codebook type and/or scenario type for a physical downlink channel comprises:
in a case that a HARQ-ACK codebook type for a first physical downlink channel is the type 1 HARQ-ACK codebook and a HARQ-ACK codebook type for a second physical downlink channel is the type 2 HARQ-ACK codebook, performing, by the terminal, either of the following:
in a case that a scenario type for the first physical downlink channel is the second scenario, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook, wherein the first HARQ-ACK sub-codebook corresponds to the first physical downlink channel, the second HARQ-ACK sub-codebook corresponds to a DG PDSCH of the second physical downlink channel, and the third HARQ-ACK sub-codebook corresponds to an SPS PDSCH of the second physical downlink channel; and
in a case that the scenario type for the first physical downlink channel is the first scenario, or in a case that the target HARQ-ACK for feedback comprises only a HARQ-ACK corresponding to an SPS PDSCH of the first physical downlink channel, generating a fourth HARQ-ACK sub-codebook and/or a fifth HARQ-ACK sub-codebook, and concatenating the fourth HARQ-ACK sub-codebook and the fifth HARQ-ACK sub-codebook to obtain the HARQ-ACK codebook, wherein the fourth HARQ-ACK sub-codebook corresponds to the DG PDSCH of the second physical downlink channel, and the fifth HARQ-ACK sub-codebook corresponds to at least one of the SPS PDSCH of the first physical downlink channel, the SPS PDSCH of the second physical downlink channel, and the specified physical downlink channel in the first physical downlink channel; wherein
the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

5. The method according to any one of claims 1 to 4, wherein the specified physical downlink channel comprises any one of the following:
a specific PDCCH, wherein the specific PDCCH carries downlink control information DCI of a first format, and the DCI of the first format indicates release of SPS PDSCH, a downlink assignment index DAI corresponding to the DCI of the first format being 1;
a specific PDSCH, wherein the specific PDSCH is scheduled by DCI of a second format, and a DAI corresponding to the DCI of the second format is 1; and
at least one SPS PDSCH.

6. The method according to claim 5, wherein in a case that the specific PDCCH and/or the specific PDSCH is a unicast physical downlink channel, the DCI of the first format and the DCI of the second format are both DCI 1_0; and
in a case that the specific PDCCH and/or the specific PDSCH is a multicast physical downlink channel, the DCI of the first format and the DCI of the second format are DCI 4_1.

7. The method according to claim 5, wherein the specific PDSCH is located in a primary cell Pcell.

8. The method according to any one of claims 1 to 7, wherein the physical downlink channel comprises a physical downlink shared channel and a physical downlink control channel.

9. An apparatus for determining a hybrid automatic repeat request-acknowledgment HARQ-ACK codebook, comprising:
a determining module configured to determine a target HARQ-ACK codebook based on a HARQ-ACK codebook type and/or scenario type for a physical downlink channel; wherein
the HARQ-ACK codebook type for the physical downlink channel comprises a type 1 HARQ-ACK codebook and a type 2 HARQ-ACK codebook; and
the scenario type for the physical downlink channel comprises a first scenario and a second scenario, wherein the first scenario is that the terminal reports, on one PUCCH, only a HARQ-ACK corresponding to a specified physical downlink channel received within a candidate PDSCH reception occasion, and the second scenario is a scenario other than the first scenario.

10. The apparatus according to claim 9, wherein the step of determining, by the determining module, a target HARQ-ACK codebook based on a HARQ-ACK codebook type and/or scenario type for a physical downlink channel comprises:
in a case that a HARQ-ACK codebook type for a first physical downlink channel is the type 1 HARQ-ACK codebook and a HARQ-ACK codebook type for a second physical downlink channel is the type 2 HARQ-ACK codebook, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook; wherein
the first HARQ-ACK sub-codebook corresponds to the first physical downlink channel, the second HARQ-ACK sub-codebook corresponds to a dynamic grant physical downlink shared channel DG PDSCH of the second physical downlink channel, and the third HARQ-ACK sub-codebook corresponds to a semi-persistent scheduling SPS PDSCH of the second physical downlink channel; and
the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

11. The apparatus according to claim 10, wherein the step of generating, by the determining module, the first HARQ-ACK sub-codebook comprises either of the following:
in a case that a scenario type for the first physical downlink channel is the first scenario, generating the first HARQ-ACK sub-codebook based on a received HARQ-ACK corresponding to the first physical downlink channel; and
in a case that the scenario type for the first physical downlink channel is the second scenario, determining a candidate PDSCH reception occasion based on a time domain resource assignment table TDRA corresponding to the first physical downlink channel, and generating the first HARQ-ACK sub-codebook based on the candidate PDSCH reception occasion, wherein the first HARQ-ACK sub-codebook comprises a HARQ-ACK sub-codebook corresponding to a DG PDSCH of the first physical downlink channel and/or a HARQ-ACK sub-codebook corresponding to an SPS PDSCH of the first physical downlink channel.

12. The apparatus according to claim 9, wherein the step of determining, by the determining module, a target HARQ-ACK codebook based on a HARQ-ACK codebook type and/or scenario type for a physical downlink channel comprises:
in a case that a HARQ-ACK codebook type for a first physical downlink channel is the type 1 HARQ-ACK codebook and a HARQ-ACK codebook type for a second physical downlink channel is the type 2 HARQ-ACK codebook, performing either of the following:
in a case that a scenario type for the first physical downlink channel is the second scenario, generating at least two of the following HARQ-ACK sub-codebooks: a first HARQ-ACK sub-codebook, a second HARQ-ACK sub-codebook, and a third HARQ-ACK sub-codebook, and concatenating the generated HARQ-ACK sub-codebooks to obtain the target HARQ-ACK codebook, wherein the first HARQ-ACK sub-codebook corresponds to the first physical downlink channel, the second HARQ-ACK sub-codebook corresponds to a DG PDSCH of the second physical downlink channel, and the third HARQ-ACK sub-codebook corresponds to an SPS PDSCH of the second physical downlink channel; and
in a case that the scenario type for the first physical downlink channel is the first scenario, or in a case that the target HARQ-ACK for feedback comprises only a HARQ-ACK corresponding to an SPS PDSCH of the first physical downlink channel, generating a fourth HARQ-ACK sub-codebook and/or a fifth HARQ-ACK sub-codebook, and concatenating the fourth HARQ-ACK sub-codebook and the fifth HARQ-ACK sub-codebook to obtain the HARQ-ACK codebook, wherein the fourth HARQ-ACK sub-codebook corresponds to the DG PDSCH of the second physical downlink channel, and the fifth HARQ-ACK sub-codebook corresponds to at least one of the SPS PDSCH of the first physical downlink channel, the SPS PDSCH of the second physical downlink channel, and the specified physical downlink channel in the first physical downlink channel; wherein
the first physical downlink channel is a unicast physical downlink channel and the second physical downlink channel is a multicast physical downlink channel, or the first physical downlink channel is a multicast physical downlink channel and the second physical downlink channel is a unicast physical downlink channel.

13. The apparatus according to any one of claims 9 to 12, wherein the specified physical downlink channel comprises any one of the following:
a specific PDCCH, wherein the specific PDCCH carries DCI of a first format, and the DCI of the first format indicates release of SPS PDSCH, a downlink assignment index DAI corresponding to the DCI of the first format being 1;
a specific PDSCH, wherein the specific PDSCH is scheduled by DCI of a second format, and a DAI corresponding to the DCI of the second format is 1; and
at least one SPS PDSCH.

14. The apparatus according to claim 13, wherein in a case that the specific PDCCH and/or the specific PDSCH is a unicast physical downlink channel, the DCI of the first format and the DCI of the second format are both DCI 1_0; and
in a case that the specific PDCCH and/or the specific PDSCH is a multicast physical downlink channel, the DCI of the first format and the DCI of the second format are DCI 4_1.

15. The apparatus according to claim 13, wherein the specific PDSCH is located in a primary cell Pcell.

16. The apparatus according to any one of claims 9 to 15, wherein the physical downlink channel comprises a physical downlink shared channel and a physical downlink control channel.

17. A terminal, comprising a processor and a memory, wherein the memory stores a program or an instruction capable of running on the processor, and when the program or instruction is executed by the processor, the steps of the method for determining a HARQ-ACK codebook according to any one of claims 1 to 8 are implemented.

18. A readable storage medium, wherein the readable storage medium stores a program or an instruction, and when the program or instruction is executed by a processor, the steps of the method for determining a HARQ-ACK codebook according to any one of claims 1 to 8 are implemented.

19. A chip, wherein the chip comprises a processor and a communication interface, the communication interface is coupled to the processor, and the processor is configured to execute a program or an instruction to implement the method for determining a HARQ-ACK codebook according to any one of claims 1 to 8.

20. A computer program product/program product, wherein (the computer program product/program product is stored in a storage medium, and) the computer program product/program product is executed by at least one processor to implement the method for determining a HARQ-ACK codebook according to any one of claims 1 to 8.
